# EUROPEAN PATENT APPLICATION

(11) **EP 4 030 195 A1**
(43) Date of publication of application: **20.07.2022**
(21) Application number: 21212256.8
(22) Date of filing: 03.12.2021
(51) Int. Cl.: G01S 15/42, G01S 15/931

(54) **OBSTACLE DETECTION METHOD AND SYSTEM, COMPUTER DEVICE, AND STORAGE MEDIUM**

(30) Priority: 18.01.2021 CN 202110063064
(71) Applicant: Guangzhou Xiaopeng Autopilot Co., Ltd., Guangzhou, Guangdong 510640 (CN)
(72) Inventor: QIN, Han, Guangzhou (CN); CHEN, Shengjun, Guangzhou (CN); JIANG, Shaofeng, Guangzhou (CN); ZHANG, Hong, Guangzhou (CN); FENG, Kai, Guangzhou (CN)
(74) Representative: Ran, Handong

(57) **Abstract**

An obstacle detection method and system, a computer device, and a storage medium are provided. The method includes: dividing a target parking space into a plurality of grids to create a grid map; starting continuously detecting during parking whether an obstacle is present in a parking path; if yes, increasing probability values of one or more grids where the detected obstacle is located by a first value, and decreasing probability values of one or more grids en route from the ultrasonic detection device to the obstacle by a second value, until the vehicle meets a preset stop condition; selecting one or more grids with probability values exceeding a probability threshold from the grid map, and grouping the same into one or more clusters; and selecting one or more grids with probability values meeting a preset condition from the one or more clusters as a final position of the obstacle.

## Description

### Field of Invention

The present disclosure relates to the field of autonomous driving technology, and in particular to an obstacle detection method, an obstacle detection system, a computer device, and a storage medium.

### Background

With the development of social economy and the car industry, people's living standards have been greatly improved, and cars have gradually entered thousands of households and have become one of the most common transportation means in today's society, leading to changes in people's lifestyles and satisfying people's needs for travelling further. People are delighted with the travel convenience brought by the popularization of cars, but the demand for parking lots is also increasing.

A parking lot refers to a place for temporary or long-term parking of vehicles. In existing parking lots, in order to improve the utilization rate of the parking lots and enhance parking management, most of the parking lots are divided into closely spaced parking spaces. During parking, some novice drivers, due to poor driving skills, are often incapable of controlling the parking distance and as a consequence their vehicles may cross the stop line, resulting in situations that one vehicle occupies two or more parking spaces or the vehicle collides with other vehicles, walls, etc. In order to reduce the occurrence of such situations, most of the existing parking spaces are provided with iron or soft plastic crash barrier posts. Plastic crash barrier posts can effectively avoid damage to vehicles, but they cannot substantially block vehicles and cannot protect surrounding vehicles and personnel and are therefore less used. Iron crash barrier posts can prevent vehicles from crossing stop lines, but for novice drivers, it is likely that their vehicles collide with the iron crash barrier posts, causing local damage to the vehicles.

It is therefore an urgent technical problem currently to be solved by those skilled in the art as to how to realize accurate detection of a crash barrier post on a parking space when a driver drives a vehicle into the parking space, so as to improve the driver's sense of safety and experience when using an autonomous parking assistance function.

The above information is given as background information only to facilitate the understanding of the present disclosure, and it is not confirmed or acknowledged whether any of the above content can be taken as prior art relative to the present disclosure.

### Summary of Invention

Embodiments of the present disclosure disclose an obstacle detection method, an obstacle detection system, a computer device, and a storage medium, which can be used to accurately detect a position of a crash barrier post on a parking space during parking of a vehicle and eliminate an erroneously detected obstacle point to improve a driver's experience in using the vehicle.

The embodiments of the present disclosure, in a first aspect, disclose an obstacle detection method.

As an alternative embodiment, in the first aspect of the embodiments of the present disclosure, the method includes:
determining parking space information using an ultrasonic detection device when searching for a parking space, the parking space information including information of a target parking space into which a vehicle is to be parked;
dividing the target parking space into a plurality of grids to create a grid map, each grid having an initial probability value;
controlling the ultrasonic detection device to start continuously detecting whether an obstacle is present in a parking path so as to update the grid map, if it is determined during parking that the vehicle meets a preset start condition;
if it is detected that an obstacle is present in the parking path, increasing probability values of one or more grids where the detected obstacle is located by a first value, and decreasing probability values of one or more grids en route from the ultrasonic detection device to the obstacle by a second value, until it is determined that the vehicle meets a preset stop condition so as to stop updating the grid map;
selecting one or more grids with probability values exceeding a probability threshold from the grid map, and grouping the selected one or more grids into one or more clusters in accordance with a principle of proximity; and
selecting one or more grids with probability values meeting a preset condition from the one or more clusters as a final position of the obstacle.

As an alternative embodiment, in the obstacle detection method, before the step of determining parking space information using an ultrasonic detection device, the method further includes steps of:
detecting whether a parking assistance request is received; and
if yes, starting searching for a parking space in response to the parking assistance request.

As an alternative embodiment, in the obstacle detection method, the parking space information further includes a target parking position in the target parking space; and
the step of controlling the ultrasonic detection device to start continuously detecting whether an obstacle is present in a parking path so as to update the grid map, includes:
determining during the parking whether a distance between the vehicle and the target parking position is less than a first distance threshold; and
if yes, determining that the vehicle meets the preset start condition, and controlling the ultrasonic detection device to start continuously detecting whether an obstacle is present in the parking path so as to update the grid map.

As an alternative embodiment, in the obstacle detection method, the step of increasing probability values of one or more grids where the detected obstacle is located by a first value, and decreasing probability values of one or more grids en route from the ultrasonic detection device to the obstacle by a second value, includes:
increasing the probability values of the one or more grids where the detected obstacle is located by the first value, decreasing the probability values of the one or more grids en route from the ultrasonic detection device to the obstacle by the second value, and determining whether the distance between the vehicle and the target parking position is less than a second distance threshold; and
if yes, determining that the vehicle meets the preset stop condition, and stopping updating the grid map.

The embodiments of the present disclosure, in a second aspect, disclose an obstacle detection system.

As an alternative embodiment, in the second aspect of the embodiments of the present disclosure, the system includes:
a parking space searching module, configured to determine parking space information using an ultrasonic detection device when searching for a parking space, the parking space information including information of a target parking space into which a vehicle is to be parked;
a map creation module, configured to divide the target parking space into a plurality of grids to create a grid map, each grid having an initial probability value;
an obstacle detection module, configured to control the ultrasonic detection device to start continuously detecting whether an obstacle is present in a parking path so as to update the grid map, if it is determined during parking that the vehicle meets a preset start condition;
a probability value changing module, configured to increase, if it is detected that an obstacle is present in the parking path, probability values of one or more grids where the detected obstacle is located by a first value, and decrease probability values of one or more grids en route from the ultrasonic detection device to the obstacle by a second value, until it is determined that the vehicle meets a preset stop condition so as to stop updating the grid map;
a selection and grouping module, configured to select one or more grids with probability values exceeding a probability threshold from the gird map, and group the selected one or more grids into one or more clusters in accordance with a principle of proximity; and
a position determination module, configured to select one or more grids with probability values meeting a preset condition from the one or more clusters as a final position of the obstacle.

As an alternative embodiment, the obstacle detection system further includes a request detection module, configured to:
detect whether a parking assistance request is received, before determining parking space information using an ultrasonic detection device when searching for a parking space; and
if a parking assistance request is received, start searching for a parking space in response to the parking assistance request.

As an alternative embodiment, in the obstacle detection system, the parking space information further includes a target parking position in the target parking space; and the obstacle detection module is specifically configured to:
determine during the parking whether a distance between the vehicle and the target parking position is less than a first distance threshold; and
if yes, determine that the vehicle meets the preset start condition, and control the ultrasonic detection device to start continuously detecting whether an obstacle is present in the parking path so as to update the grid map

As an alternative embodiment, in the obstacle detection system, the probability value changing module is specifically configured to:
increase the probability values of the one or more grids where the detected obstacle is located by the first value, decrease the probability values of the one or more grids en route from the ultrasonic detection device to the obstacle by the second value, and determine whether the distance between the vehicle and the target parking position is less than a second distance threshold; and
if yes, determine that the vehicle meets the preset stop condition, and stop updating the grid map.

As an alternative embodiment, in the third aspect of the embodiments of the present disclosure, the computer device includes memory and a processor. The memory has a computer program stored thereon which, when executed by the processor, implements the obstacle detection method according to any of the above aspects.

The embodiments of the present disclosure, in a fourth aspect, disclose a storage medium having computer-executable instructions stored thereon.

As an alternative embodiment, in the fourth aspect of the embodiments of the present disclosure, the computer-executable instructions, when executed by a computer processor, implements the obstacle detection method according to any of the above aspects.

Compared with the existing technologies, the embodiments of the present disclosure have the following beneficial effects.

The present disclosure, by incorporating information of multiple ultrasonic waves into a grid map, can accurately detect the position of an obstacle such as a crash barrier post on a parking space during parking and eliminate erroneous detection of obstacle points, thereby effectively preventing a vehicle from crossing lines of the parking space and colliding with another vehicle, and improving a driver's sense of safety and experience when using a parking assistance function. The method is suitable for large-scale promotion and application.

### Brief Description of Drawings

In order to more clearly explain technical solutions in the embodiments of the present disclosure or in the existing technologies, drawings to be used in the description of the embodiments or of the existing technologies will be briefly introduced below. Obviously, the drawings in the following description just illustrate some embodiments of the present disclosure. For those of ordinary skill in the art, other drawings can be obtained based on these drawings without paying any creative work.
Fig. 1 is a schematic flowchart of an obstacle detection method provided in Embodiment One of the present disclosure;
Fig. 2 is a schematic diagram of a target parking space and a target parking position in an embodiment of the present disclosure;
Fig. 3 is a schematic diagram of a grid map created in an embodiment of the present disclosure;
Fig. 4 is a schematic diagram of updating a probability value of a grid in a grid map in an embodiment of the present disclosure;
Fig. 5 is a schematic flowchart of an obstacle detection method provided in Embodiment Two of the present disclosure;
Fig. 6 is a schematic flowchart of an obstacle detection method provided in Embodiment Three of the present disclosure;
Fig. 7 is a schematic flowchart of an obstacle detection method provided in Embodiment Four of the present disclosure;
Fig. 8 is a schematic diagram of functional modules of an obstacle detection system provided in Embodiment Five of the present disclosure; and
Fig. 9 is a schematic structural diagram of a computer device provided in Embodiment Six of the present disclosure.

### Detailed Description

Technical solutions in the embodiments of the present disclosure will be described clearly and completely below in combination with accompanying drawings of the embodiments of the present disclosure. Obviously, the described embodiments are only some, but not all, of the embodiments of the present disclosure. All other embodiments obtained by those skilled in the art based on the embodiments described in the present disclosure and without any creative work should fall within the protection scope of the present disclosure.

It should be noted that the terms "first", "second" and the like as used in the specification and claims of the present disclosure are intended to distinguish different objects, but not to describe a specific order. The terms "include", "have", and any variations thereof as used in the embodiments of the present disclosure are intended to cover a non-exclusive inclusion. For example, a process, a method, a system, a product or a device that includes a list of steps or units is not limited to including only those explicitly listed steps or units, but may include other steps or units that are not explicitly listed or are inherent to such process, method, product or device. The embodiments of the present disclosure disclose an obstacle detection method, an obstacle detection system, a computer device, and a storage medium, which can be used to effectively reduce the parking pressure experienced by novice drivers, ensure driving safety and improve users' driving experience.

### Embodiment One

As mentioned in the Background section, when a driver drives a vehicle into a parking space, it is likely that the vehicle collides with a crash barrier post. At present, in order to solve the above problem, basically all vehicles are configured with ultrasonic radar by automobile manufacturers to provide drivers with an autonomous parking assistance function to help drivers identify obstacles around a vehicle body. However, the inventor found through a lot of market research that although the ultrasonic radar-based autonomous parking assistance function can to some extent help a driver during parking of a vehicle, it also has shortcomings. Specifically, positions of obstacle points (crash barrier posts) detected by ultrasonic radar are not accurate enough and are often quite different from actual positions of the obstacles; and when the ultrasonic radar is interfered, obstacle points may be erroneously detected, which can cause false alarms.

Therefore, in view of the shortcomings of the existing technologies, the inventor actively researched and innovated based on years of rich practical experience in and professional knowledge of the automotive industry as well as the application of academic theories, hoping to create an operable and practical obstacle detection technology. After continuous research, enormous designs, and repeated trials and improvements, the present invention with real practical values was finally created.

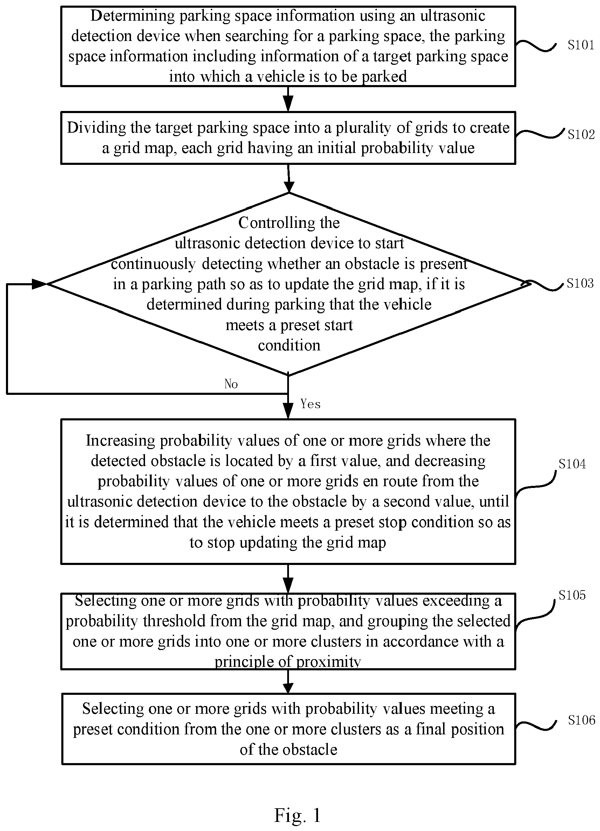

Referring to Fig. 1, shown is a schematic flowchart of an obstacle detection method provided in the present embodiment. The obstacle detection method is applicable to a scenario where a driver drives and parks a vehicle into a parking space provided with a crash barrier post. The method is executed by an obstacle detection system. The obstacle detection system may be implemented by software and/or hardware, and is integrated in the vehicle. As shown in Fig. 1, the obstacle detection method may include the following steps.

In step S101, parking space information is determined using an ultrasonic detection device when searching for a parking space. The parking space information includes information of a target parking space into which the vehicle is to be parked.

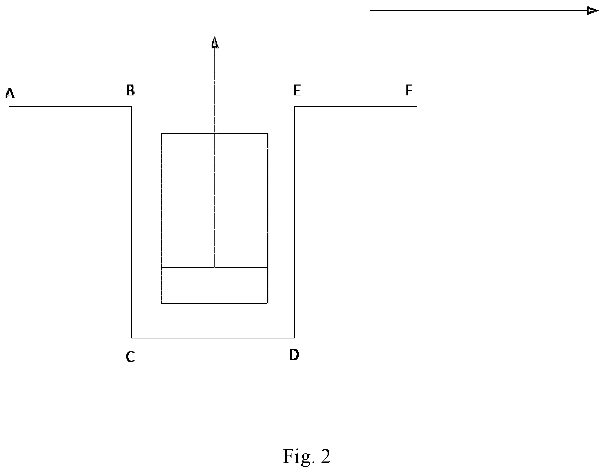

It should be noted that, in the present embodiment, the ultrasonic detection device is used to search for a parking space into which the vehicle can be parked, and once a parking space into which the vehicle can be parked is found, the parking space is determined as a target parking space. In other words, the target parking space must be an unoccupied parking space. Referring to Fig. 2, in Fig. 2, the target parking space found is represented by the space area enclosed by line segments BC, CD, DE and BE. Although the parking space example given in Fig. 2 is a parking space where perpendicular parking is needed, the present embodiment is also applicable to a parking space where parallel parking is needed. Besides, the arrow in Fig. 2 represents a traveling direction of the vehicle during searching for the parking space. The square in the target parking space is a target parking position, namely a place where the vehicle is to be finally parked. The target parking position is generally an exact center of the parking space, so that distances to objects around the parking space can be maximized.

In the present embodiment, the ultrasonic detection device may be an ultrasonic sensor, or an ultrasonic rangefinder, or other instruments used to detect objects and measure distances based on ultrasonic principles. Description of the present embodiment is now given by taking an ultrasonic sensor as an example.

During searching for the parking space, the ultrasonic sensor emits an ultrasonic wave at a specified frequency. If the ultrasonic wave hits an obstacle, the ultrasonic wave is reflected back in the form of an echo. When the ultrasonic sensor receives the echo, it indicates that there is an obstacle. The ultrasonic sensor calculates a distance between the vehicle and the obstacle based on a propagation speed of the ultrasonic wave and time required from transmitting the ultrasonic wave to receiving the echo. Generally, when it is detected that the distance to the obstacle jumps by a too large value, it may be determined that the current parking space is an unoccupied parking space. Of course, there are many ways to search for a parking space by means of ultrasonic technology, and all of them have been implemented in the existing technologies. As they are not the focus of the design of this scheme, they will not be elaborated herein.

It may be appreciated that the aforementioned obstacle may be a parked vehicle, or a building such as a post, a wall, etc. The present embodiment is not restricted in this respect.

In step S102, the target parking space is divided into a plurality of grids to create a grid map, each grid having an initial probability value.

It should be noted that environment maps built by machines are roughly divided into three types: topological maps, geometric maps, and grid maps. Among them, a grid map is a product of digitization of a real map. The grid map decomposes environment into a series of discrete grids. Each grid has a value. Each grid contains two types of basic information, namely coordinates and whether it is an obstacle or not. The probability value of each grid being occupied is used to represent environmental information which is usually represented as whether it is an obstacle or not. Each grid corresponds to a small area in the actual environment, reflecting information of the environment, which makes it easy for the machine to store information of the map.

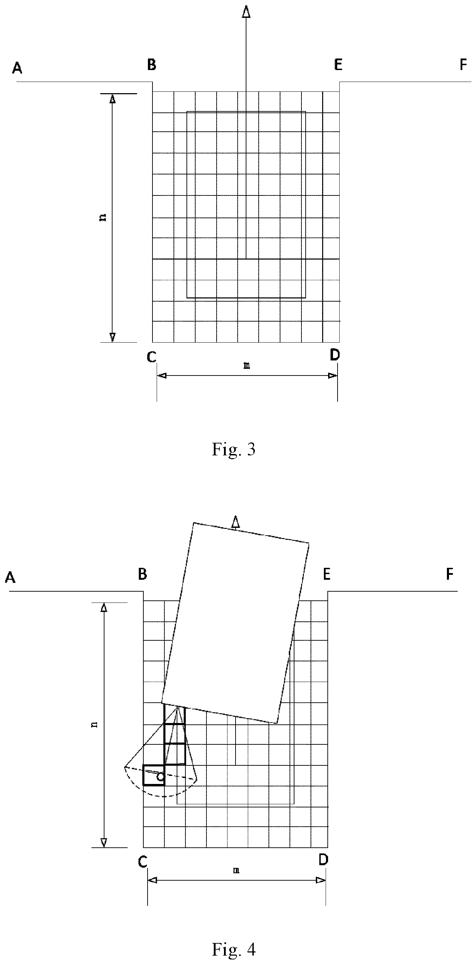

Referring to Fig. 3, after the target parking space is determined, in creating the grid map, in order to improve the stability, it is generally considered to project all points on the x, y plane parallel to the ground, so that positioning is performed only on the x, y plane. Specifically, the grid map may be created by taking the midpoint of the line segment CD as the origin (or taking other points in the target parking space as the origin; the present embodiment is not restricted in this respect). The grid map has a width of m and a length of n, which are actual width and length of the target parking space. The grid map has a resolution of x, i.e., the number of squares in 1 m is 1/x. At initialization, each grid of the grid map has an initial probability value. The probability values of the grids are usually set to be the same, and may be assigned, for example, the value 0.

In step S103, if it is determined during parking that the vehicle meets a preset start condition, the ultrasonic detection device is controlled to start continuously detecting whether an obstacle is present in a parking path so as to update the grid map. If it is detected that an obstacle is present in the parking path, execute step S104. If it is detected that an obstacle is not present in the parking path, continue to execute step S103.

The preset start condition is set by a technician by experience obtained based on specific experimental results. The purpose of setting the preset start condition is to allow the vehicle to know when it can start to detect whether an obstacle is present in the parking path, so as to avoid premature use of the ultrasonic detection device and thus save resources.

It should be noted that the updating of the grid map actually refers to updating of the probability value of each grid in the grid map during the parking, i.e., updating of whether the grid is occupied.

In step S104, probability values of one or more grids where the detected obstacle is located are increased by a first value, and probability values of one or more grids en route from the ultrasonic detection device to the obstacle are decreased by a second value, until it is determined that the vehicle meets a preset stop condition so as to stop updating the grid map.

The preset stop condition is set by a technician by experience obtained based on specific experimental results. The purpose of setting the preset stop condition is to allow the vehicle to know when it can stop detecting whether an obstacle is present in the parking path, so as to avoid unnecessary use of the ultrasonic detection device and thus save resources.

Referring to Fig. 4, in Fig. 4, the solid square represents the vehicle; the ultrasonic detection device at the rear of the vehicle is detecting obstacles; the hollow circle represents the detected obstacle. As can be seen, the obstacle point is judged to fall on one grid, i.e., this grid is the grid where the obstacle is located, and the probability value thereof needs to be increased once by the first value. Probability values of grids en route from the ultrasonic detection device to the obstacle point (there are three such grids in Fig. 4) need to be decreased once by the second value.

The first value and the second value may be arbitrary values. For example, both of them may be 1. Then, during the updating, when an obstacle is detected the first time when the detecting is conducted, a probability value of a grid where the detected obstacle is located is increased by 1. That is, the probability value is increased by 1 on the basis of an original value 0, i.e., 0+1. If an obstacle is detected still on this grid the second time when the detecting is conducted, the probability value of this grid is increased again by 1, i.e., 1+1, causing the probability value to become 2. But if an obstacle is not detected on this grid the second time when the detecting is conducted, the probability value of this grid is decreased by 1, i.e., 1-1, causing the probability value to become 0 again. Similarly, during the updating, a probability value of a grid en route from the ultrasonic detection device to the obstacle is decreased by 1. That is, the probability value is decreased by 1 on the basis of an original value 0, i.e., 0-1, causing the probability value to become -1. If an obstacle is not detected still on this grid the second time when the detecting is conducted, the probability value of this grid is decreased again by 1, i.e., -1-1, causing the probability value to become -2. But if an obstacle is detected on this grid the second time when the detecting is conducted, the probability value of this grid is increased by 1, i.e., -1+1, causing the probability value to become 0 again. In the present embodiment, by updating the probability value of each grid in the grid map, it can be learned which grid is truly occupied by an obstacle. Because the updating is continuous, i.e., the grid map incorporates information of multiple ultrasonic waves, erroneous detection can be avoided. In this way, the grid where the obstacle is located can be accurately obtained, and an actual environment area corresponding to the grid is the actual position of the obstacle.

It should be noted that four ultrasonic detection devices are usually provided at the rear of the vehicle. In Fig. 4, only one of the ultrasonic detection devices is used as an example for illustration, and this is also the case with the other three ultrasonic detection devices. The four ultrasonic detection devices simultaneously update all the grids, thereby updating the probability values of the grids being occupied.

In step S105, one or more grids with probability values exceeding a probability threshold are selected from the grid map, and grouped into one or more clusters in accordance with the principle of proximity.

It should be noted that the probability threshold is set by a technician by experience obtained based on specific experimental results, and the probability threshold may be any value.

Because the probability value refers to the probability that a grid is occupied by an obstacle, after the four ultrasonic detection devices have updated probability values of all grids, one or more grids with probability values exceeding the probability threshold may be selected, and those selected are grids on which there are most probably obstacles. Sometimes the obstacle is large in size and may occupy multiple grids, and it is therefore necessary to group grids clustering together into a same group, i.e., to classify them as a same obstacle.

In step S106, one or more grids with probability values meeting a preset condition are selected from the one or more clusters as a final position of the obstacle.

It should be noted that the preset condition may be, for example, selecting a grid with a probability value being the highest, because the higher the probability value is, the greater the probability is. After the grouping, the grid with a probability value being the highest in each group is bound to be the grid on which there is most probably an obstacle, and this grid is therefore taken as the final position of the obstacle. Of course, it is also possible to take an area formed by grids with probability values being the highest as the final position of the obstacle.

The present embodiment discloses an obstacle detection method, which, by incorporating information of multiple ultrasonic waves into a grid map, can accurately detect the position of an obstacle such as a crash barrier post on a parking space during parking and eliminate erroneous detection of obstacle points, thereby effectively preventing a vehicle from crossing lines of the parking space and colliding with another vehicle, and improving a driver's sense of safety and experience when using a parking assistance function. The method is suitable for large-scale popularization and application.

### Embodiment Two

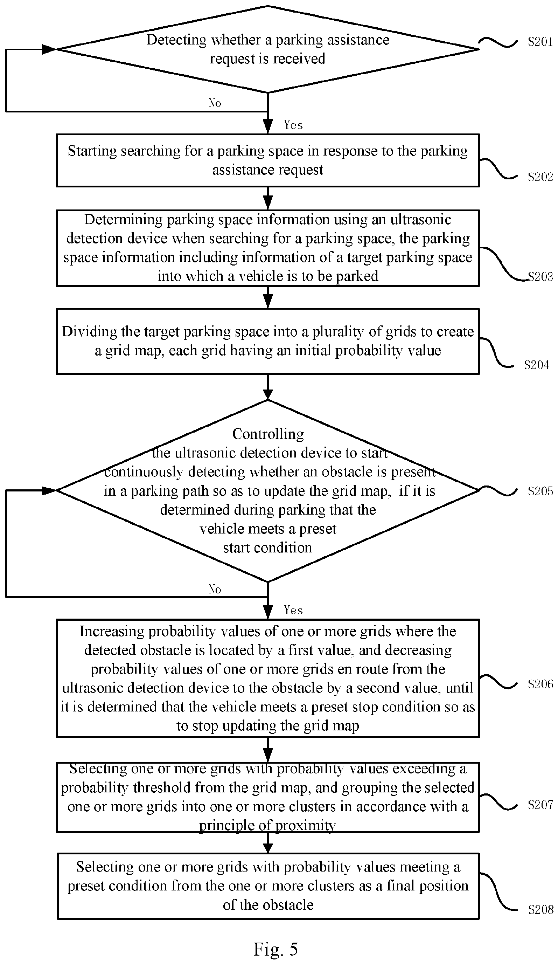

Referring to Fig. 5, shown is a schematic flowchart of an obstacle detection method disclosed in the present embodiment. The present embodiment, on the basis of the technical solution provided in Embodiment One, optimizes the method by adding steps before step S101 in which "Parking space information is determined using an ultrasonic detection device when searching for a parking space, the parking space information including information of a target parking space into which the vehicle is to be parked". Explanations of terms that are the same as or correspond to those used in the foregoing embodiments will not be repeated herein. Specifically, the method provided in the present embodiment may further include the following steps.

It is detected whether a parking assistance request is received.

If it is detected that a parking assistance request is received, start searching for a parking space in response to the parking assistance request.

Based on the above optimization, as shown in Fig. 5, the obstacle detection method provided in the present embodiment may specifically include the following steps.

In step S201, it is detected whether a parking assistance request is received. If it is detected that a parking assistance request is received, execute step S202. If it is detected that a parking assistance request is not received, continue to execute step S201.

In step S202, start searching for a parking space in response to the parking assistance request.

It should be noted that the parking assistance request is usually sent by the driver, for example by pressing a certain function key, inputting a voice, or by APP control. The parking assistance request means that the driver sends a request for assistance or autonomous parking to a vehicle with a parking assistance function. When the driver sends the parking assistance request, step S202 is triggered, i.e., searching for a parking space starts. When a parking space is found, step S203 is triggered, i.e., a parking guidance state is enabled to guide the vehicle to be parked into the parking space.

In step S203, parking space information is determined using an ultrasonic detection device when searching for a parking space. The parking space information includes information of a target parking space into which the vehicle is to be parked.

As mentioned above, ways to search for a parking space by means of ultrasonic technology have been implemented in the existing technologies, and any of them may be chosen to implement the searching.

In step S204, the target parking space is divided into a plurality of grids to create a grid map, each grid having an initial probability value.

In step S205, if it is determined during parking that the vehicle meets a preset start condition, the ultrasonic detection device is controlled to start continuously detecting whether an obstacle is present in a parking path so as to update the grid map. If it is detected that an obstacle is present in the parking path, execute step S206. If it is detected that an obstacle is not present in the parking path, continue to execute step S205.

In step S206, probability values of one or more grids where the detected obstacle is located are increased by a first value, and probability values of one or more grids en route from the ultrasonic detection device to the obstacle are decreased by a second value, until it is determined that the vehicle meets a preset stop condition so as to stop updating the grid map.

In step S207, one or more grids with probability values exceeding a probability threshold are selected from the grid map, and grouped into one or more clusters in accordance with the principle of proximity.

In step S208, one or more grids with probability values meeting a preset condition are selected from the one or more clusters as a final position of the obstacle.

In addition to the beneficial effects brought by Embodiment One, the present embodiment, by setting how to cause the vehicle to enter the state of searching for a parking space, enables the vehicle to be able to timely respond as the driver does. This completes the entire parking assistance process, makes the vehicle more intelligent and humanized, and thus improves use experience.

### Embodiment Three

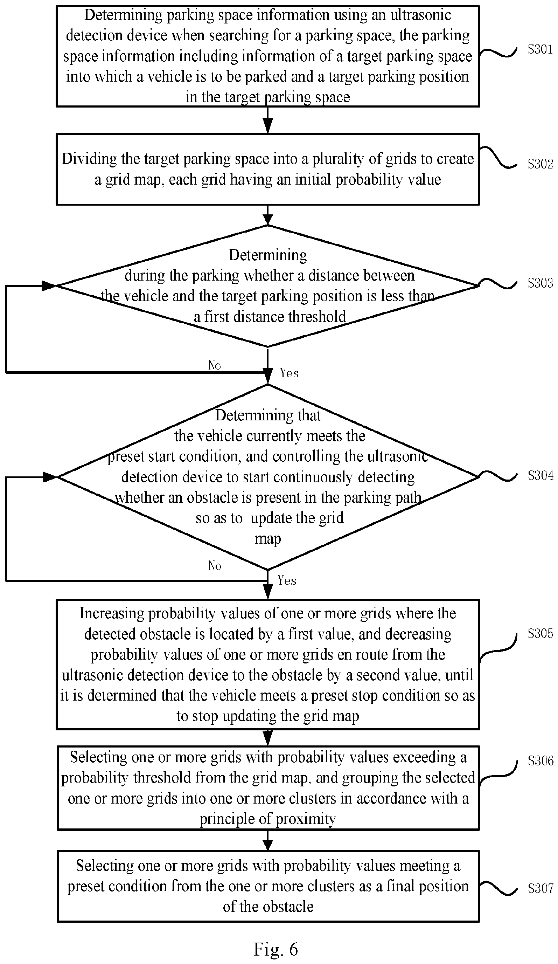

Referring to Fig. 6, shown is a schematic flowchart of an obstacle detection method disclosed in the present embodiment. The present embodiment, on the basis of the technical solution provided in Embodiment One, optimizes step S103 in which "If it is determined during parking that the vehicle meets a preset start condition, the ultrasonic detection device is controlled to start continuously detecting whether an obstacle is present in a parking path so as to update the grid map". The parking space information further includes a target parking position in the target parking space. Explanations of terms that are the same as or correspond to those used in the foregoing embodiments will not be repeated herein. The optimization is as follows.

During the parking, it is determined whether a distance between the vehicle and the target parking position is less than a first distance threshold.

If it is determined that the distance between the vehicle and the target parking position is less than the first distance threshold, it is determined that the vehicle meets the preset start condition, and the ultrasonic detection device is controlled to start continuously detecting whether an obstacle is present in the parking path so as to update the grid map.

Based on the above optimization, as shown in Fig. 6, the obstacle detection method provided in the present embodiment may specifically include the following steps.

In step S301, parking space information is determined using an ultrasonic detection device when searching for a parking space. The parking space information includes information of a target parking space into which the vehicle is to be parked and a target parking position in the target parking space.

In Figs. 2 to 4, the hollow square in the target parking space is the target parking position, namely a place where the vehicle is to be finally parked. The target parking position is generally an exact center of the parking space, so that distances to objects around the parking space can be maximized.

In step S302, the target parking space is divided into a plurality of grids to create a grid map, each grid having an initial probability value.

In step S303, during the parking, it is determined whether a distance between the vehicle and the target parking position is less than a first distance threshold. If it is determined that the distance between the vehicle and the target parking position is less than the first distance threshold, execute step S304. If it is determined that the distance between the vehicle and the target parking position is not less than the first distance threshold, continue to execute step S303.

It should be noted that the first distance threshold is set by a technician by experience obtained based on specific experimental results, and the first distance threshold may be any value.

It should be noted that, as mentioned above, in order to avoid premature use of the ultrasonic detection device and thus save resources, the vehicle has to be enabled to know when it can start to detect whether an obstacle is present in the parking path. The solution given in the present embodiment is to determine whether the distance between the vehicle and the target parking position is less than the first distance threshold. That is, when the distance between the vehicle and the target parking position reaches the first distance threshold, it is considered that the vehicle enters a detection area (at this time, the vehicle has not entered the target parking space or has entered the target parking space just a little), at which time the vehicle knows that it can start to detect whether an obstacle is present in the parking path.

In step S304, it is determined that the vehicle meets a preset start condition, and the ultrasonic detection device is controlled to start continuously detecting whether an obstacle is present in a parking path so as to update the grid map. If it is detected that an obstacle is present in the parking path, execute step S305. If it is detected that an obstacle is not present in the parking path, continue to execute step S304.

In step S305, probability values of one or more grids where the detected obstacle is located are increased by a first value, and probability values of one or more grids en route from the ultrasonic detection device to the obstacle are decreased by a second value, until it is determined that the vehicle meets a preset stop condition so as to stop updating the grid map.

In step S306, one or more grids with probability values exceeding a probability threshold are selected from the grid map, and grouped into one or more clusters in accordance with the principle of proximity.

In step S307, one or more grids with probability values meeting a preset condition are selected from the one or more clusters as a final position of the obstacle.

In addition to the beneficial effects brought by Embodiment One, the present embodiment, by refining a judgment condition of whether the vehicle starts to detect whether an obstacle is present in the parking path, enables the vehicle to be able to accurately identify the environment it is in and thus timely make a response. This makes the vehicle more intelligent and humanized and has a relatively high application value.

### Embodiment Four

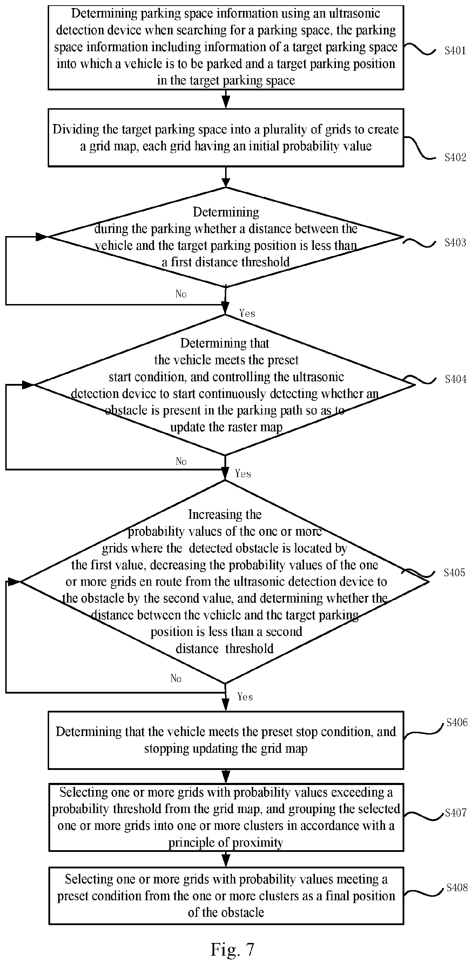

Referring to Fig. 7, shown is a schematic flowchart of an obstacle detection method disclosed in the present embodiment. The present embodiment, on the basis of the technical solution provided in Embodiment Three, optimizes step S305 in which "Probability values of one or more grids where the detected obstacle is located are increased by a first value, and probability values of one or more grids en route from the ultrasonic detection device to the obstacle are decreased by a second value, until it is determined that the vehicle meets a preset stop condition so as to stop updating the grid map". Explanations of terms that are the same as or correspond to those used in the foregoing embodiments will not be repeated herein. The optimization is as follows.

Probability values of one or more grids where the detected obstacle is located are increased by a first value; probability values of one or more grids en route from the ultrasonic detection device to the obstacle are decreased by a second value; and it is determined whether a distance between the vehicle and the target parking position is less than a second distance threshold.

If it is determined that the distance between the vehicle and the target parking position is less than the second distance threshold, it is determined that the vehicle meets the preset stop condition and updating of the grid map is stopped.

Based on the above optimization, as shown in Fig. 7, the obstacle detection method provided in the present embodiment may specifically include the following steps.

In step S401, parking space information is determined using an ultrasonic detection device when searching for a parking space. The parking space information includes information of a target parking space into which the vehicle is to be parked and a target parking position in the target parking space.

In step S402, the target parking space is divided into a plurality of grids to create a grid map, each grid having an initial probability value.

In step S403, during the parking, it is determined whether a distance between the vehicle and the target parking position is less than a first distance threshold. If it is determined that the distance between the vehicle and the target parking position is less than the first distance threshold, execute step S404. If it is determined that the distance between the vehicle and the target parking position is not less than the first distance threshold, continue to execute step S403.

In step S404, it is determined that the vehicle meets a preset start condition, and the ultrasonic detection device is controlled to start continuously detecting whether an obstacle is present in a parking path so as to update the grid map. If it is detected that an obstacle is present in the parking path, execute step S405. If it is detected that an obstacle is not present in the parking path, continue to execute step S404.

In step S405, probability values of one or more grids where the detected obstacle is located are increased by a first value; probability values of one or more grids en route from the ultrasonic detection device to the obstacle are decreased by a second value; and it is determined whether a distance between the vehicle and the target parking position is less than a second distance threshold. If it is determined that the distance between the vehicle and the target parking position is less than the second distance threshold, execute step S406. If it is determined that the distance between the vehicle and the target parking position is not less than the second distance threshold, continue to execute step S405.

It should be noted that the second distance threshold is set by a technician by experience obtained based on specific experimental results, and the second distance threshold may be any value.

It should be noted that, as mentioned above, in order to avoid unnecessary use of the ultrasonic detection device and thus save resources, the vehicle has to be enabled to know when it can start to detect whether an obstacle is present in the parking path. The solution given in the present embodiment is to determine whether the distance between the vehicle and the target parking position is less than the second distance threshold. That is, when the distance between the vehicle and the target parking position reaches the second distance threshold, it is considered that the vehicle enters an unnecessary detection area (at this time, the vehicle has entered the target parking space a lot), at which time the vehicle knows that it can start to detect whether an obstacle is present in the parking path.

In step S406, it is determined that the vehicle meets a preset stop condition, and updating of the grid map is stopped.

In step S407, one or more grids with probability values exceeding a probability threshold are selected from the grid map, and grouped into one or more clusters in accordance with the principle of proximity.

In step S408, one or more grids with probability values meeting a preset condition are selected from the one or more clusters as a final position of the obstacle.

In addition to the beneficial effects brought by Embodiment One, the present embodiment disclosure, by refining a judgment condition of whether the vehicle starts or stops detecting whether an obstacle is present in the parking path, enables the vehicle to be able to accurately identify the environment it is in and thus timely make a response. This makes the vehicle more intelligent and humanized, and has a relatively high application value.

### Embodiment Five

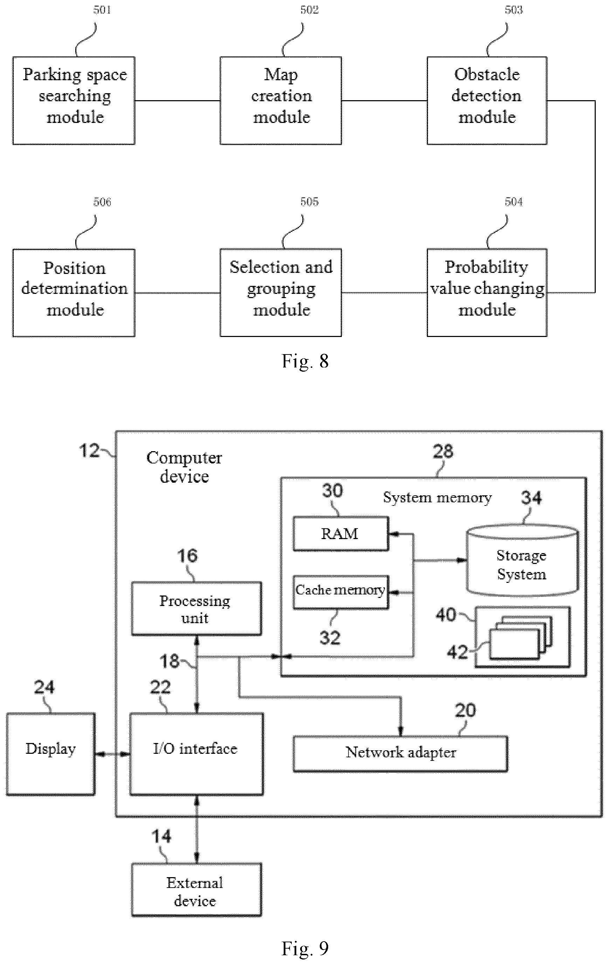

Referring to Fig. 8, shown is a schematic diagram of functional modules of an obstacle detection system provided by Embodiment Five of the present disclosure. The system is suitable for executing the obstacle detection methods provided by the embodiments of the present disclosure. The system specifically includes a parking space searching module 501, a map creation module 502, an obstacle detection module 503, a probability value changing module 504, a selection and grouping module 505, and a position determination module 506.

The parking space searching module 501 is configured to determine parking space information using an ultrasonic detection device when searching for a parking space. The parking space information includes information of a target parking space into which the vehicle is to be parked.

The map creation module 502 is configured to divide the target parking space into a plurality of grids to create a grid map, each grid having an initial probability value.

The obstacle detection module 503 is configured to control the ultrasonic detection device to start continuously detecting whether an obstacle is present in a parking path so as to update the grid map, if it is determined during parking that the vehicle meets a preset start condition.

The probability value changing module 504 is configured to increase, if it is detected that an obstacle is present in the parking path, probability values of one or more grids where the detected obstacle is located by a first value, and decrease probability values of one or more grids en route from the ultrasonic detection device to the obstacle by a second value, until it is determined that the vehicle meets a preset stop condition so as to stop updating the grid map.

The selection and grouping module 505 is configured to select one or more grids with probability values exceeding a probability threshold from the grid map and group the selected one or more grids into one or more clusters in accordance with the principle of proximity.

The position determination module 506 is configured to select one or more grids with probability values meeting a preset condition from the one or more clusters as a final position of the obstacle.

Preferably, the system further includes a request detection module configured to: detect whether a parking assistance request is received, before determining parking space information using an ultrasonic detection device when searching for a parking space; and if a parking assistance request is received, start searching for a parking space in response to the parking assistance request.

Preferably, the parking space information further includes a target parking position in the target parking space.

In this case, the obstacle detection module is specifically configured to: determine during the parking whether a distance between the vehicle and the target parking position is less than a first distance threshold; and determine that the vehicle meets the preset start condition, and control the ultrasonic detection device to start continuously detecting whether an obstacle is present in the parking path so as to update the grid map, if determining that the distance between the vehicle and the target parking position is less than the first distance threshold.

Preferably, the probability value changing module is specifically configured to: increase the probability values of the one or more grids where the detected obstacle is located by the first value, decrease the probability values of the one or more grids en route from the ultrasonic detection device to the obstacle by the second value, and determining whether the distance between the vehicle and the target parking position is less than a second distance threshold; and determine that the vehicle meets the preset stop condition, and stop updating the grid map, if determining that the distance between the vehicle and the target parking position is less than the second distance threshold.

The present embodiment discloses an obstacle detection system, which, by incorporating information of multiple ultrasonic waves into a grid map, can accurately detect the position of an obstacle such as a crash barrier post on a parking space during parking and eliminate erroneous detection of obstacle points, thereby effectively preventing a vehicle from crossing lines of the parking space and colliding with another vehicle, and improving a driver's sense of safety and experience when using a parking assistance function. The method is suitable for large-scale popularization and application.

The above-mentioned system can execute the method provided by any of the embodiments of the present disclosure, and has corresponding functional modules for executing the method and can bring corresponding beneficial effects.

### Embodiment Six

Fig. 9 is a schematic structural diagram of a computer device provided by Embodiment Six of the present disclosure. Fig. 9 shows a block diagram of an exemplary computer device 12 suitable for implementing the embodiments of the present disclosure. The computer device 12 shown in Fig. 9 serves only as an example, and should not be construed as limiting the function and application scope of the present embodiment.

As shown in Fig. 9, the computer device 12 is represented in the form of a general-purpose computing device. Components of the computer device 12 may include, but are not limited to one or more processors or processing units 16, a system memory 28, and a bus 18 connecting different system components (including the system memory 28 and the processing unit(s) 16).

The bus 18 represents one or more of several types of bus structures, including a memory bus or a memory controller, a peripheral bus, a graphics acceleration port, a processor, or a local bus using any bus structure of multiple bus structures. For example, these architectures include but are not limited to industry standard architecture (ISA) bus, microchannel architecture (MAC) bus, enhanced ISA bus, video electronics standards association (VESA) local bus, and peripheral component interconnection (PCI) bus.

The computer device 12 typically includes multiple types of computer system readable media. These media may be any available media that can be accessed by the computer device 12, including volatile and nonvolatile media, removable and non-removable media.

The system memory 28 may include computer system readable media in the form of a volatile memory, such as a random access memory (RAM) 30 and/or a cache memory 32. The computer device 12 may further include other removable/non-removable, volatile/nonvolatile computer system storage media. As an example only, the storage system 34 may be used to read from and write to a non-removable, nonvolatile magnetic medium (not shown in Fig. 9 and generally referred to as a "hard drive"). Although not shown in Fig. 9, a disk drive for reading from and writing to a removable nonvolatile disk (such as a "floppy disk") and an optical drive for reading from and writing to a removable nonvolatile optical disk (such as a CD-ROM, a DVD-ROM, or other optical media) may be provided. In these cases, each drive may be connected to the bus 18 through one or more data media interfaces. The memory 28 may include at least one program product. The program product has a set of (e.g., at least one) program modules that are configured to execute the functions of the embodiments of the present disclosure.

A program/utility tool 40 having a set of (at least one) program modules 42 may be stored, for example, in the memory 28. Such program modules 42 include but are not limited to an operating system, one or more applications, other program modules, and program data. Each of these examples or a combination thereof may include the implementation of a network environment. The program modules 42 generally execute the functions and/or methods in the described embodiments of the present disclosure.

The computer device 12 may also communicate with one or more external devices 14 (e.g., a keyboard, a pointing device, a display 24, etc.), and may also communicate with one or more devices that enable a user to interact with the computer device 12, and/or communicate with any device (e.g., a network card, a modem, etc.) that enables the computer device 12 to be able to communicate with one or more other computing devices. Such communication may be implemented through an input/output (I/O) interface 22. In addition, the computer device 12 may also communicate with one or more networks (e.g., a local area network (LAN), a wide area network (WAN), and/or a public network such as the Internet) through a network adapter 20. As shown in the figure, the network adapter 20 communicates with other modules of the computer device 12 through the bus 18. It should be appreciated that although not shown in Fig. 9, other hardware and/or software modules may be used in conjunction with the computer device 12. Such hardware and/or software modules include but are not limited to microcode, a device drive, a redundant processing unit, an external disk drive array, a RAID system, a tape drive, a data backup storage system, etc.

The processing unit 16, by running programs stored in the system memory 28, executes various functional applications and data processing, such as implementing the obstacle detection methods provided by the embodiments of the present disclosure.

In other words, the programs, when executed by the processing unit, implements the following steps: determining parking space information using an ultrasonic detection device when searching for a parking space, the parking space information including information of a target parking space into which the vehicle is to be parked; dividing the target parking space into a plurality of grids to create a grid map, each grid having an initial probability value; controlling the ultrasonic detection device to start continuously detecting whether an obstacle is present in a parking path so as to update the grid map, if it is determined during parking that the vehicle meets a preset start condition; increasing probability values of one or more grids where the detected obstacle is located by a first value, and decreasing probability values of grids en route from the ultrasonic detection device to the obstacle by a second value, until it is determined that the vehicle meets a preset stop condition so as to stop updating the grid map, if it is detected that an obstacle is present in the parking path; selecting one or more grids with probability values exceeding a probability threshold from the grid map, and grouping the selected one or more grids into clusters in accordance with the principle of proximity; and selecting one or more grids with probability value meeting a preset condition from the one or more clusters as a final position of the obstacle.

### Embodiment Seven

Embodiment Seven of the present disclosure provides a computer-readable storage medium having computer-executable instructions stored thereon. The instructions, when executed by a processor, implements the obstacle detection methods as provided in all the embodiments of the present disclosure.

In other words, the instructions, when executed by the processor, implements the following steps: determining parking space information using an ultrasonic detection device when searching for a parking space, the parking space information including information of a target parking space into which the vehicle is to be parked; dividing the target parking space into a plurality of grids to create a grid map, each grid having an initial probability value; controlling the ultrasonic detection device to start continuously detecting whether an obstacle is present in a parking path so as to update the grid map, if it is determined during parking that the vehicle meets a preset start condition; increasing probability values of one or more grids where the detected obstacle is located by a first value, and decreasing probability values of one or more grids en route from the ultrasonic detection device to the obstacle by a second value, until it is determined that the vehicle meets a preset stop condition so as to stop updating the grid map, if it is detected that an obstacle is present in the parking path; selecting one or more grids with probability values exceeding a probability threshold from the grid map, and grouping the selected one or more grids into clusters in accordance with the principle of proximity; and selecting one or more grids with probability values meeting a preset condition from the one or more clusters as a final position of the obstacle.

Any combination of one or more computer-readable media may be adopted. The computer-readable medium may be a computer-readable signal medium or a computer-readable storage medium. The computer-readable storage medium, for example, may be but not limited to an electrical, magnetic, optical, electromagnetic, infrared, or semiconductor system, apparatus, or device, or a combination of any of the foregoing. More specific examples (non-exhaustive list) of the computer-readable storage medium include an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In this text, the computer-readable storage medium may be any tangible medium that contains or stores a program. The program may be used by or in combination with an instruction execution system, apparatus, or device.

The computer-readable signal medium may include a data signal propagated in a baseband or propagated as a part of a carrier wave, with a computer-readable program code carried therein. Such propagated data signal may take many forms, including but not limited to an electromagnetic signal, an optical signal, or any suitable combination of the foregoing. The computer-readable signal medium may also be any computer-readable medium other than a computer-readable storage medium. The computer-readable medium may send, propagate, or transmit the program for use by or in combination with the instruction execution system, apparatus, or device.

The program code stored on the computer-readable medium may be transmitted using any suitable medium, including but not limited to wireless, a wire, an optical cable, RF, and the like, or any suitable combination of the foregoing.

The computer program code used to execute the operations of the present disclosure may be written in one or more programming languages or a combination thereof. The programming languages include object-oriented programming languages-such as Java, Smalltalk, C++, and may also include conventional procedural programming languages-such as "C" language or similar programming language. The program code may be executed entirely on a user's computer, executed partly on a user's computer, executed as an independent software package, executed partly on a user's computer and partly on a remote computer, or executed entirely on a remote computer or a server. In the case where a remote computer is used, the remote computer may be connected to the user's computer through any type of network, including a local area network (LAN) or a wide area network (WAN), or connected to an external computer (e.g., through the Internet provided by an Internet service provider).

It should be noted that the above described are only preferred embodiments of the present disclosure and technical principles used in the present disclosure. Those skilled in the art will appreciate that the present disclosure is not limited to the specific embodiments described herein, and for those skilled in the art various obvious changes, readjustments and substitutions can be made without departing from the protection scope of the present disclosure. Therefore, although the present disclosure has been described in detail by way of the above embodiments, the present disclosure is not limited to the above embodiments, and can include more other equivalent embodiments without departing from the concept of the present disclosure. The scope of the present disclosure is determined by the scope of the appended claims.

## Claims

1. An obstacle detection method, **characterized by**:
determining parking space information using an ultrasonic detection device when searching for a parking space, the parking space information comprising information of a target parking space into which a vehicle is to be parked;
dividing the target parking space into a plurality of grids to create a grid map, each grid having an initial probability value;
controlling the ultrasonic detection device to start continuously detecting whether an obstacle is present in a parking path so as to update the grid map, if it is determined during parking that the vehicle meets a preset start condition;
if it is detected that an obstacle is present in the parking path, increasing probability values of one or more grids where the detected obstacle is located by a first value, and decreasing probability values of one or more grids en route from the ultrasonic detection device to the obstacle by a second value, until it is determined that the vehicle meets a preset stop condition so as to stop updating the grid map;
selecting one or more grids with probability values exceeding a probability threshold from the grid map, and grouping the selected one or more grids into one or more clusters in accordance with a principle of proximity; and
selecting one or more grids with probability values meeting a preset condition from the one or more clusters as a final position of the obstacle.

2. The obstacle detection method according to claim 1, further comprising, before the step of determining parking space information using an ultrasonic detection device:
detecting whether a parking assistance request is received; and
if yes, starting searching for a parking space in response to the parking assistance request.

3. The obstacle detection method according to claim 1, wherein the parking space information further comprises a target parking position in the target parking space, and the step of controlling the ultrasonic detection device to start continuously detecting whether an obstacle is present in a parking path so as to update the grid map comprises:
determining during the parking whether a distance between the vehicle and the target parking position is less than a first distance threshold; and
if yes, determining that the vehicle meets the preset start condition, and controlling the ultrasonic detection device to start continuously detecting whether an obstacle is present in the parking path so as to update the grid map.

4. The obstacle detection method according to claim 3, wherein the step of increasing probability values of one or more grids where the detected obstacle is located by a first value and decreasing probability values of one or more grids en route from the ultrasonic detection device to the obstacle by a second value comprises:
increasing the probability values of the one or more grids where the detected obstacle is located by the first value, decreasing the probability values of the one or more grids en route from the ultrasonic detection device to the obstacle by the second value, and determining whether the distance between the vehicle and the target parking position is less than a second distance threshold; and
if yes, determining that the vehicle meets the preset stop condition, and stopping updating the grid map.

5. An obstacle detection system, **characterized by**:
a parking space searching module, configured to determine parking space information using an ultrasonic detection device when searching for a parking space, the parking space information comprising information of a target parking space into which a vehicle is to be parked;
a map creation module, configured to divide the target parking space into a plurality of grids to create a grid map, each grid having an initial probability value;
an obstacle detection module, configured to control the ultrasonic detection device to start continuously detecting whether an obstacle is present in a parking path so as to update the grid map, if it is determined during parking that the vehicle meets a preset start condition;
a probability value changing module, configured to increase, if it is detected that an obstacle is present in the parking path, probability values of one or more grids where the detected obstacle is located by a first value, and decrease probability values of one or more grids en route from the ultrasonic detection device to the obstacle by a second value, until it is determined that the vehicle meets a preset stop condition so as to stop updating the grid map;
a selection and grouping module, configured to select one or more grids with probability values exceeding a probability threshold from the grid map, and group the selected one or more grids into one or more clusters in accordance with a principle of proximity; and
a position determination module, configured to select one or more grids with probability values meeting a preset condition from the one or more clusters as a final position of the obstacle.

6. The obstacle detection system according to claim 5, further comprising a request detection module configured to:
detect whether a parking assistance request is received, before determining parking space information using an ultrasonic detection device when searching for a parking space; and
if a parking assistance request is received, start searching for a parking space in response to the parking assistance request.

7. The obstacle detection system according to claim 5, wherein the parking space information further comprises a target parking position in the target parking space, and the obstacle detection module is specifically configured to:
determine during the parking whether a distance between the vehicle and the target parking position is less than a first distance threshold; and
if yes, determine that the vehicle meets the preset start condition, and control the ultrasonic detection device to start continuously detecting whether an obstacle is present in the parking path so as to update the grid map.

8. The obstacle detection system according to claim 7, wherein the probability value changing module is specifically configured to:
increase the probability values of the one or more grids where the detected obstacle is located by the first value, decrease the probability values of the one or more grids en route from the ultrasonic detection device to the obstacle by the second value, and determine whether the distance between the vehicle and the target parking position is less than a second distance threshold; and
if yes, determine that the vehicle meets the preset stop condition, and stop updating the grid map.

9. A computer device comprising memory and a processor, the memory having a computer program stored thereon which, when executed by the processor, implements the obstacle detection method according to any one of claims 1 to 4.

10. A storage medium having computer-executable instructions stored thereon which, when executed by a computer processor, results in performance of the obstacle detection method according to any one of claims 1 to 4.
